# EUROPÄISCHE PATENTANMELDUNG

(11) **EP 3 632 836 A1**
(43) Veröffentlichungstag der Anmeldung: **08.04.2020**
(21) Anmeldenummer: 19210979.1
(22) Anmeldetag: 13.06.2018
(51) Int. Cl.: B66D 1/39, B66C 11/16, B66C 19/00, E02B 8/02, E02B 9/00, B08B 1/00

(54) **KRAN MIT SEILWINDENANORDNUNG**

(30) Priorität: 05.07.2017 AT 15417 U
(62) Teilanmeldung aus: 18177585.9
(71) Anmelder: Hans Künz GmbH, 6971 Hard (Vbg.) (AT)
(72) Erfinder: Klapper, Georg, 6971 Hard (AT)
(74) Vertreter: Fechner, Thomas

(57) **Zusammenfassung**

Kran (40), insbesondere Portalkran, zum Transport zumindest eines Containers (41) oder einer sonstigen Last, wobei der Kran (40) zumindest eine, auf einem Kranträger (42) des Krans (40) verfahrbar gelagerte, Laufkatze (43) und eine Lastaufnahmevorrichtung (44) zur Verbindung mit dem Container (41) oder der sonstigen Last aufweist, wobei die Lastaufnahmevorrichtung (44) mittels Seilen (30-37) der Laufkatze (43) heb- und senkbar an der Laufkatze (43) hängt, und die Laufkatze (43) zumindest eine Seilwindenanordnung (1) zum Auf- und/oder Abwickeln der Seile (30 - 37) der Laufkatze (43) aufweist, wobei die Seilwindenanordnung (1) zumindest eine um eine Trommelachse (3) drehbar gelagerte Seiltrommel (2) zum Auf- und/oder Abwickeln zumindest eines der Seile (30 - 37) und eine Tragstruktur (20) und einen Spindeltrieb (14) zum Verschieben der Seiltrommel (2) relativ zur Tragstruktur (20) umfasst, wobei der Spindeltrieb (14) eine sich entlang einer Spindelachse (15) erstreckende Spindel (16) aufweist, und ein Seilablaufpunkt (6) des zumindest einen Seils (30 - 37), an welchem das Seil (30 - 37) tangential von der Seiltrommel (2) auf- und/oder abläuft, bezogen auf die Tragstruktur (20) zumindest im Wesentlichen ortsfest ist, dadurch gekennzeichnet, dass die Spindelachse (15) koaxial zur Trommelachse (3) der Seiltrommel (2) angeordnet ist.

## Beschreibung

Die vorliegende Erfindung betrifft einen Kran, insbesondere Portalkran, zum Transport zumindest eines Containers oder einer sonstigen Last, wobei der Kran zumindest eine, auf einem Kranträger des Krans verfahrbar gelagerte, Laufkatze und eine Lastaufnahmevorrichtung zur Verbindung mit dem Container oder der sonstigen Last aufweist, wobei die Lastaufnahmevorrichtung mittels Seilen der Laufkatze heb- und senkbar an der Laufkatze hängt, und die Laufkatze zumindest eine Seilwindenanordnung zum Auf- und/oder Abwickeln der Seile der Laufkatze aufweist, wobei die Seilwindenanordnung zumindest eine um eine Trommelachse drehbar gelagerte Seiltrommel zum Auf- und/oder Abwickeln zumindest eines der Seile und eine Tragstruktur und einen Spindeltrieb zum Verschieben der Seiltrommel relativ zur Tragstruktur umfasst, wobei der Spindeltrieb eine sich entlang einer Spindelachse erstreckende Spindel aufweist, und ein Seilablaufpunkt des zumindest einen Seils, an welchem das Seil tangential von der Seiltrommel auf- und/oder abläuft, bezogen auf die Tragstruktur zumindest im Wesentlichen ortsfest ist, .

Seilwindenanordnungen werden in vielfältigen Ausführungsformen zum Auf- und/oder Abwickeln zumindest eines Seils herangezogen, wobei das zumindest eine Seil meist auf eine kreiszylindrische Seiltrommel, die auch Winde genannt wird, auf- und/oder von der Seiltrommel abgewickelt wird. Das zumindest eine Seil ist meist spiralförmig, insbesondere wendelförmig bzw. schraubenlinienförmig, auf der Seiltrommel aufwickelbar oder aufgewickelt. Charakteristisch ist für gängige Seilwindenanordnungen ist, dass der Seilablaufpunkt des zumindest einen Seils, an welchem das Seil tangential auf die oder von der Seiltrommel auf- oder abläuft, ortsveränderlich ist. D.h., der Seilablaufpunkt bewegt sich während des Auf- oder Abwickelns des Seils entlang einer Richtung parallel zur Trommelachse der Seiltrommel. Diese Bewegung könnte man auch als ein "Wandern" des Seilablaufpunktes auf einem Trommelmantel der Seiltrommel während der Verdrehung der Seiltrommel bezeichnen. Das "Wandern" des Seilablaufpunkts entlang des Trommelmantels der Seiltrommel führt dazu, dass ein frei hängendes Seilende eines abschnittsweise auf der Seiltrommel aufgewickelten Seils, an dem beispielsweise eine Last befestigt ist, mit dem Seilablaufpunkt parallel zur Trommelachse mitbewegt wird, weshalb es während der Hub- bzw. Senkbewegung des Seils gleichzeitig auch zu einer, meist unerwünschten, überlagerten Verschiebung der Last in eine Richtung parallel zur Trommelachse kommt.

Um das zumindest eine von der Seiltrommel ablaufende Seil in eine vorbestimmte Richtung zu lenken, werden häufig Seilrollen eingesetzt. Seilrollen weisen eine umlaufende Seilrille auf, in welcher das Seil geführt ist. Ein wesentlicher Parameter einer Seilrolle ist der seitliche Anlaufwinkel des Seiles beim Einlaufen bzw. Auslaufen des Seiles in bzw. aus der Seilrille der Seilrolle. Der seitliche Anlaufwinkel ist der Winkel der seitlichen Ablenkung des Seils bezüglich einer Rillenebene in welcher die Seilrille der Seilrolle angeordnet ist. Ein großer seitlicher Anlaufwinkel, z.B. mehr als 4°, hat einen erheblichen Einfluss auf die Lebensdauer des Seils. Um den seitlichen Anlaufwinkel zu begrenzen, müssen Seilrollen deshalb in relativ großem Abstand von der Seiltrommel angeordnet sein.

Das Dokument DE 101 35 034 C1 offenbart eine Seilwindenanordnung für einen Laufkran mit einer Verschiebeeinheit, welche die Seiltrommel synchron zum Auf- und Abwickeln der Seile derart längsverschiebt, dass sich die jeweiligen Seilablaufpunkte, bezogen auf einen Hubwerksrahmen, jeweils immer an der gleichen Stelle befinden. Dadurch kann der seitliche Anlaufwinkel des Seils auf der jeweiligen Seilrolle konstant gehalten werden. Die Verschiebeeinheit weist in einer möglichen Ausführungsvariante einen Gewindespindeltrieb zur Verschiebung der Seiltrommel auf, wobei der Gewindespindeltrieb mit der Seiltrommelachse über einen Zahnriemen gekoppelt ist.

Aufgabe der Erfindung ist es, einen vorteilhaften Kran der eingangs genannten Art bereitzustellen, welcher einfach ausgebildet werden kann.

Erfindungsgemäß gelingt dies durch einen Kran mit den Merkmalen des Anspruchs 1.

Beim Kran gemäß der Erfindung ist vorgesehen, dass die Spindelachse koaxial zur Trommelachse der Seiltrommel angeordnet ist. D.h., dass die Spindelachse auf einer gemeinsamen Achse mit der Trommelachse der Seiltrommel liegt. Dadurch kann ein einfacher Aufbau der Seilwindenanordnung des Krans realisiert werden.

Im Sinne der Erfindung handelt es sich beim Spindeltrieb um ein Schraubgetriebe. Insbesondere kann der Spindeltrieb gemäß der Erfindung eine Trapezgewindetrieb, Kugelgewindetrieb, Rollengewindetrieb mit Rollenrückführung, Planetenrollengewindetrieb, Steilgewindetrieb etc. sein. Der Spindeltrieb verbindet die Tragstruktur mit der Seiltrommel, wobei eine Verstellung des Spindeltriebs zu einer Relativverschiebung der Seiltrommel gegenüber der Tragstruktur führt. Die Verstellung des Spindeltriebs erfolgt dabei in Richtung der Spindelachse. Da die Trommelachse der Seiltrommel koaxial zur Spindelachse angeordnet ist, erfolgt die Relativverschiebung der Seiltrommel gegenüber der Tragstruktur ebenfalls in eine Richtung parallel zur Trommelachse bzw. zur Spindelachse.

Mit dem Ausdruck, wonach der Seilablaufpunkt "zumindest im Wesentlichen ortsfest" ist, ist gemeint, dass der Seilablaufpunkt während des Aufwickelns bzw. Abwickelns des Seils bezogen auf die Tragstruktur zumindest im Wesentlichen unbeweglich ist. Als Seilablaufpunkt wird insbesondere der Punkt bezeichnet, an welchem eine Längsmittenachse des Seils von einer schraubenförmigen Ausrichtung - welchen ein auf der Seiltrommel aufgewickelter Abschnitt des Seils einnimmt - in eine tangentiale Richtung - bezogen auf den Trommelmantel der Seiltrommel - übergeht. Der Seilablaufpunkt könnte auch als Seilauflaufpunkt oder als Seilauf- und ablaufpunkt bezeichnet werden. In diesem Zusammenhang bedeutet der Ausdruck "zumindest im Wesentlichen", dass sich der Seilablaufpunkt zwischen einem vollständig abgewickelten Zustands des Seils und einem vollständig aufgewickelten Zustand des Seils günstigerweise um weniger als den Betrag eines Seildurchmessers des Seils parallel zur Trommelachse bewegt.

Der Begriff Tragstruktur ist im Sinne der Erfindung weit zu fassen. Es kann sich bei der Tragstruktur beispielsweise um ein tragendes Bauteil einer Laufkatze des Krans handeln. Die Tragstruktur dient jedenfalls der Abstützung der Seiltrommel und der Aufnahme der an der Seiltrommel angreifenden Seilkräfte. Die Seiltrommel kann sich auf der Tragstruktur abstützen oder in anderer Art und Weise mit der Tragstruktur verbunden sein. Beispielsweise ist es auch denkbar und möglich, dass die Seiltrommel an der Tragstruktur hängt.

Die Seiltrommel ist günstigerweise an einem Lagergestell drehbar gelagert. Das Lagergestell könnte auch als Tragrahmen oder Trommelrahmen bezeichnet werden. Günstigerweise ist vorgesehen, dass, abgesehen von der Verdrehung der drehbar gelagerten Seiltrommel, keine Relativbewegung zwischen der Seiltrommel und dem Lagergestell möglich ist. D.h. dass das Lagergestell günstigerweise gemeinsam mit der Seiltrommel relativ zur Tragstruktur verschoben werden kann. Um die Reibung zwischen dem die Seiltrommel lagernden und tragenden Lagergestell und der Tragstruktur beim Verschieben der Seiltrommel bzw. des Lagergestells relativ zur Tragstruktur zu verringern, kann die Seilwindenanordnung eine Gleitführung oder eine Rollenführung aufweisen.

Vorzugsweise ist vorgesehen, dass sich die Spindel, zumindest in einer Endstellung, zumindest abschnittsweise in einen Hohlraum der Seiltrommel hinein erstreckt. Dadurch kann eine besonders kompakte Ausführung der Seilwindenanordnung realisiert werden. Die Seilwindenanordnung weist günstigerweise zwei Endstellungen auf, wobei die Endstellungen den Verfahrweg der Seiltrommel gegenüber der Tragstruktur, in einander entgegengesetzte, parallel zur Spindelachse bzw. zur Trommelachse ausgerichtete, Richtungen, begrenzen.

Der Hohlraum der Seiltrommel könnte in radialer Richtung bezogen auf die Trommelachse vollständig von einem Trommelmantel der Seiltrommel begrenzt sein. Im Weiteren könnte die Seiltrommel zwei einander gegenüberliegende Trommelflansche aufweisen, welche den Hohlraum in axialer Richtung bezogen auf die Trommelachse begrenzen.

Besonders bevorzugt ist vorgesehen, dass die Spindel des Spindeltriebs in einer der Endstellungen über zumindest 50%, vorzugsweise zumindest 70%, der Länge der Spindel, im Hohlraum der Seiltrommel angeordnet ist.

In einer bevorzugten Ausführungsform weist die Spindel ein Außengewinde mit einer Ganghöhe auf, wobei die Ganghöhe des Außengewindes zumindest dem Seildurchmesser des zumindest einen Seils entspricht. Die Ganghöhe bezieht sich auf den Abstand von zwei Gewindegängen bezogen auf eine Richtung parallel zur Spindelachse. Die Ganghöhe gibt das Maß der Verstellung einer Spindelmutter des Spindeltriebs bezogen auf eine Richtung parallel zur Spindelachse bei einer Relativverdrehung der Spindelmutter gegenüber der Spindel um 360°, d.h. um eine Umdrehung, an. Mit dem Seildurchmesser ist im Sinne der Erfindung der Außendurchmesser des Seils gemeint. Ein Seil weist in einem Querschnitt orthogonal zur Längsmittenachse des Seils gesehen häufig einen vom Kreis abweichenden Querschnitt auf. Als Seildurchmesser könnte auch der Durchmesser eines kleinsten, den Querschnitt des Seil umgreifenden, Umkreises bezeichnet werden.

Vorzugsweise ist vorgesehen, dass die Seiltrommel einen Trommelmantel mit zumindest einer spiralförmigen Rille zur Aufnahme zumindest eines der Seile aufweist, wobei eine Ganghöhe der spiralförmigen Rille der Ganghöhe des Außengewindes der Spindel entspricht. Die zumindest eine spiralförmige Rille des Trommelmantels erstreckt sind günstigerweise wendelförmig entlang der, insbesondere um die, Trommelachse. Die zumindest eine Rille des Trommelmantels könnte auch als helixförmig oder schraubenlinienförmig bezeichnet werden. Die zumindest eine Rille kann sich über die gesamte Längserstreckung des Trommelmantels schraubenförmig erstrecken. Es ist aber auch denkbar und möglich, dass der Trommelmantel mehrere Rillen aufweist, die, bezogen auf die Richtung der Trommelachse, hintereinander und voneinander beabstandet angeordnet sein können. In anderen Ausführungsformen ist es denkbar und möglich, dass die spiralförmigen Rillen ineinander verschachtelt sind, d.h., dass die Ganghöhe einer jeweiligen spiralförmigen Rille größer ist als der Seildurchmesser des zumindest einen Seils. Beispielsweise könnte die Ganghöhe ein ganzzahliges Vielfaches des Seildurchmessers betragen. Es ist z.B. möglich, dass vier kongruente spiralförmige Rillen, die jeweils eine Ganghöhe aufweisen die dem vierfachen Seildurchmesser entspricht, bezogen auf eine Umfangsrichtung der Trommelachse der Seiltrommel um jeweils eine Viertelumdrehung versetzt sind. Dies ist jedoch nur ein konkretes Ausführungsbeispiel und kann auf eine beliebige Anzahl von Seilen übertragen werden. Die Gesamtheit der Rillen des Trommelmantels könnte auch als mehrgängige Rillung bezeichnet werden. In einer möglichen anderen Ausführungsform könnte eine Außenoberfläche des Trommelmantels kreiszylindermantelförmig, d.h. im Wesentlichen glatt, ausgeführt sein. D.h., dass dann auf einen gerillten Trommelmantel verzichtet wird.

In einer möglichen Ausführungsform gemäß der Erfindung könnte vorgesehen sein, dass die Spindel verdrehfest und, zumindest in axialer Richtung bezogen auf die Spindelachse, unverschiebbar an der Tragstruktur festgelegt ist. Besonders bevorzugt ist dann vorgesehen, dass die Spindel an der Tragstruktur fixiert ist, d.h. dass alle Freiheitsgrade der Spindel in Bezug auf die Tragstruktur gesperrt sind.

Es könnte vorgesehen sein, dass der Spindeltrieb ein Übersetzungsgetriebe zum Übertragen einer Drehbewegung der Seiltrommel auf eine in die Spindel eingreifende Spindelmutter des Spindeltriebs aufweist. Dadurch ist es möglich, eine Spindel mit einem Außengewinde zu verwenden, welches eine Ganghöhe aufweist, die geringer ist als der Betrag des Seildurchmesser des zumindest einen Seils.

In einer möglichen Ausführungsvariante ist es denkbar und möglich, dass die oder eine in die Spindel eingreifende Spindelmutter des Spindeltriebs verdrehfest an der Seiltrommel befestigbar oder befestigt ist. Bei dieser Ausführungsform ist also vorgesehen, dass die Drehbewegung der Seiltrommel direkt auf die Spindelmutter übertragen wird.

Es könnte auch vorgesehen sein, dass die in die Spindel eingreifende Spindelmutter verdrehfest am Lagergestell der Seiltrommel befestigbar oder befestigt ist.

In einer anderen möglichen Ausführungsformen gemäß der Erfindung kann vorgesehen sein, dass der Spindeltrieb einen Spindelantrieb zur Verdrehung der Spindel relativ zur Tragstruktur aufweist. Dabei kann die Verschiebung der Seiltrommel zur Gänze mittels des Spindeltriebs erfolgen, insbesondere dann, wenn die Spindelmutter am Lagergestell befestigt ist. In anderen Ausführungsformen wäre es aber auch denkbar, dass es während des Betriebs zu einer Überlagerung der Seiltrommel-Verdrehbewegung mit der Verdrehung der Spindel des Spindeltriebs kommt. Insgesamt ist im Sinne der Erfindung aber immer vorgesehen, dass der Seilablaufpunkt des zumindest einen Seils bezogen auf die Tragstruktur, zumindest im Wesentlichen, ortsfest ist.

Es könnte vorgesehen sein, dass für jedes Seil der Laufkatze eine eigene Seilwindenanordnung vorgesehen ist. Besonders bevorzugt ist es, wenn mehrere Seile, z.B. vier Seile, auf einer gemeinsamen Seiltrommel aufwickelbar sind. Wie bereits im Zusammenhang mit den möglichen Ausführungsformen der Seilwindenanordnung ausgeführt, können die Rillen zur Aufnahme eines jeweiligen Seiles bezogen auf die Richtung der Trommelachse hintereinander, d.h. beabstandet voneinander angeordnet sein. Auch Ausführungsvarianten von Seiltrommeln mit mehrgängigen Rillen sind denkbar und möglich.

Weitere Vorteile und Einzelheiten der Erfindung werden im Folgenden anhand der in den Figuren gezeigten Ausführungsbeispiele gemäß der Erfindung erläutert. In diesen Figuren zeigen:
- Fig. 1: eine Ansicht eines ersten Ausführungsbeispiels einer Seilwindenanordnung in einer ersten Endstellung;
- Fig. 2: die Seilwindenanordnung gemäß Fig. 1 in einer zweiten Endstellung;
- Fig. 3 und 4: ein zweites Ausführungsbeispiel einer Seilwindenanordnung in Darstellungen analog zu den Fig. 1 und 2;
- Fig. 5 und 6: ein drittes Ausführungsbeispiel einer Seilwindenanordnung in Ansichten analog zu den Fig. 1 und 2;
- Fig. 7 und 8: einen erfindungsgemäßen Kran in zwei unterschiedlichen Arbeitspositionen;
- Fig. 9: eine isometrische Ansicht einer entlang von Laufkatzenschienen verschiebbaren Laufkatze des Krans gemäß Fig. 7 in der in Fig. 7 gezeigten Arbeitsposition;
- Fig. 10: eine Ansicht orthogonal zu einer Längserstreckung der Laufkatzenschienen nach Fig. 9;
- Fig. 11: einen Grundriss der Laufkatze nach Fig. 9;
- Fig. 12 bis 14: Darstellungen analog zu den Fig. 9 bis 11 für die in Fig. 8 dargestellte Arbeitsposition des Krans, und
- Fig. 15 bis 18: ein alternatives Ausführungsbeispiel einer Seilwindenanordnung gemäß der Erfindung in zwei Endstellungen

Aus Gründen der Übersichtlichkeit sind in den Figuren nicht jeweils sämtliche Bezugszeichen eingetragen.

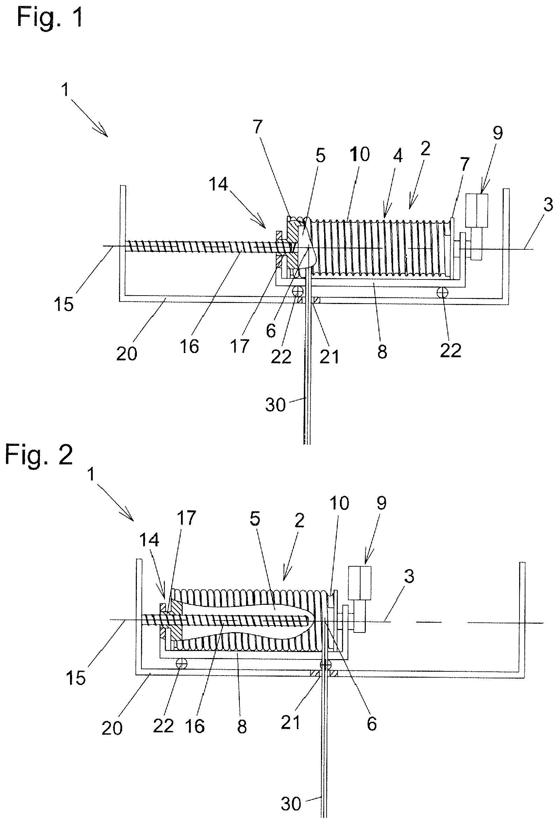

Die in den Fig. 1 und 2 dargestellte erfindungsgemäße Seilwindenanordnung 1 weist eine Seiltrommel 2 zum Auf- und/oder Abwickeln eines Seils 30 und ein Lagergestell 8 zur drehbaren Lagerung der um eine Trommelachse 3 drehbaren Seiltrommel 2 auf. Die, beispielsweise mit Wälzlagern ausgeführte, Lagerung der Seiltrommel 2 am Lagergestell 8 ist in den Figuren 1 und 2 nicht gesondert dargestellt. Derartige Anordnungen sind allerdings in vielfältigen Ausführungsformen allgemein bekannt.

Die Seiltrommel 2 weist einen Trommelmantel 4 und zwei Trommelflansche 7 auf, welche, in axialer Richtung bezogen auf die Trommelachse 3 an einander gegenüberliegenden Seiten, an den Trommelmantel 4 anschließen. Im Inneren der Seiltrommel 2 ist ein Hohlraum 5 ausgebildet, welcher, in radialer Richtung bezogen auf die Trommelachse 3, vom Trommelmantel 4 begrenzt ist. In axialer Richtung, bezogen auf die Trommelachse 3, ist der Hohlraum 5, von den Trommelflanschen 7 begrenzt.

Der Trommelmantel 4 weist im Ausführungsbeispiel eine spiralförmige Rille 10 zur Aufnahme des Seils 30 auf. Die spiralförmige Rille 10 ist schraubenlinienförmig ausgebildet, d. h. nach Art einer sich entlang der Trommelachse 3 erstreckenden Helix. Die Rille 10 könnte auch als Rillung bezeichnet werden. Die Ganghöhe der spiralförmigen Rille 10 entspricht im Ausführungsbeispiel dem Seildurchmesser des Seils 30. Die Ganghöhe der Rille 10 könnte in einer anderen Ausführungsvariante auch eine Ganghöhe aufweisen, die größer ist als der Seildurchmesser des Seils 30, d.h., dass dann die Windungen des auf dem Trommelmantel 4 aufgewickelten Abschnitts des Seils 30 voneinander beabstandet sind. Der Trommelmantel 4 der Seiltrommel 2 könnte in anderen Ausführungsvarianten auch ohne Rillen ausgeführt sein. Das heißt, die Außenoberfläche des Trommelmantels 4 könnte beispielsweise kreiszylindermantelförmig, d.h. glatt, ausgebildet sein.

Die Seilwindenanordnung 1 weist im Weiteren einen Trommelantrieb 9 zum Verdrehen der Seiltrommel 2 um die Trommelachse 3 relativ zum Lagergestell 8 auf. Beim Trommelantrieb 9 kann es sich, wie in den Figuren dargestellt, um einen Getriebemotor handeln.

Das Lagergestell 8 stützt sich mittels Stützrollen 22 der Seilwindenanordnung 1 auf einer Tragstruktur 20 ab. Die Stützrollen 22 erleichtern die Relativbewegung des Lagergestells 8 und damit der Seiltrommel 2 gegenüber der Tragstruktur 20. In einer anderen Ausführungsvariante könnten anstatt Stützrollen 22 auch Gleitkufen oder ähnliches verwendet werden.

Die Tragstruktur 20 ist in den Fig. 1 und 2 nur schematisch dargestellt, um das Prinzip der erfindungsgemäßen Seilwindenanordnung 1 zu verdeutlichen. Im Zusammenhang mit den noch zu erläuternden Anwendungsbeispielen der erfindungsgemäßen Seilwindenanordnung 1 wird auf mögliche Ausführungsvarianten der Tragstruktur 20 eingegangen. Die Tragstruktur 20 weist im in den Fig. 1 und 2 dargestellten Ausführungsbeispiel einen Seildurchlass 21 auf, durch welchen das Seil 30 hindurchgefädelt ist. Ein Seildurchlass 21 ist jedoch nicht zwingend.

Die Seilwindenanordnung 1 weist einen Spindeltrieb 14 zum Verschieben der Seiltrommel 2 relativ zur Tragstruktur 20 auf. Der Spindeltrieb 14 umfasst eine sich entlang einer Spindelachse 15 erstreckende Spindel 16 und eine Spindelmutter 17, welche in die Spindel 16 eingreift. Der Spindeltrieb 14 verbindet die Tragstruktur 20 mit der Seiltrommel 2. Die Spindelachse 15 des Spindeltriebs 14 ist koaxial zur Trommelachse 3 der Seiltrommel 2 angeordnet.

Die Spindel 16 ist im ersten Ausführungsbeispiel verdrehfest und in axialer Richtung bezogen auf die Spindelachse 15 unverschiebbar an der Tragstruktur 20 festgelegt. Auch in alle Richtungen orthogonal zur Spindelachse 15 ist die Spindel 16 unverschiebbar an der Tragstruktur 20 fixiert.

Im ersten Ausführungsbeispiel ist vorgesehen, dass die Spindelmutter 17 verdrehfest an der Seiltrommel 2 befestigt ist. Eine Verdrehung der Seiltrommel 2 mittels des Trommelantriebs 9 führt daher zu einer entsprechenden Verdrehung der Spindelmutter 17.

Eine Verstellung der Spindelmutter 17 relativ zur Spindel 16 entlang der Spindelachse 15 führt zu einer entsprechenden Verstellung der Seiltrommel 2 entlang der Trommelachse 3 relativ zur Tragstruktur 20. Die Seilwindenanordnung 1 weist im Ausführungsbeispiel zwei Endstellungen auf, die den Verschiebeweg der Spindelmutter 17 relativ zur Spindel 16 begrenzen. Insgesamt ist somit auch die Seiltrommel 2 zwischen der ersten Endstellung und der zweiten Endstellung der Seilwindenanordnung 1 relativ zur Tragstruktur 20 verschiebbar.

Zusammenfassend ist im ersten Ausführungsbeispiel somit vorgesehen, dass das Lagergestell 8 gemeinsam mit der Seiltrommel 2 und der Spindelmutter 17 und dem Trommelantrieb 9 entlang der Trommelachse 3 relativ zur Tragstruktur 20 verschiebbar ist.

Im Ausführungsbeispiel ist der Spindeltrieb 14 als Trapezgewindetrieb ausgebildet. D.h., die Spindelmutter 17 weist ein Trapez-Innengewinde und die Spindel 16 ein Trapez-Außengewinde auf, welche ineinander greifen. Auch andere Ausführungsvarianten von Spindeltrieben sind grundsätzlich denkbar und möglich, wie dies bereits eingangs erwähnt ist. Beispielsweise könnte der Spindeltrieb 14 auch ein Flachgewindetrieb sein.

Im ersten Ausführungsbeispiel ist vorgesehen, dass die Ganghöhe der spiralförmigen Rille 10 einer Ganghöhe des Außengewindes der Spindel 16 entspricht. Eine Verdrehung der Seiltrommel 2 um eine Umdrehung, d.h. um 360°, führt daher zu einer Relativverschiebung der Seiltrommel 2 gegenüber der Tragstruktur 20, in einer Richtung parallel zur Trommelachse 4, um die Ganghöhe des Außengewindes der Spindel 16. Dadurch kann gewährleistet werden, dass ein Seilablaufpunkt 6 des Seils 30, an welchem das Seil 30 tangential von der Seiltrommel 2 auf- und/oder abläuft, bezogen auf die Tragstruktur 20, zumindest im Wesentlichen ortsfest ist. Da die Ganghöhe des Außengewindes der Spindel 16 im ersten Ausführungsbeispiel der Ganghöhe der spiralförmigen Rille 10 des Trommelmantels 4 entspricht, ist somit zwangsweise sichergestellt, dass der Seilablaufpunkt 6 in Bezug auf die Tragstruktur 20 stets ortsfest ist.

In Fig. 1 ist die Seiltrommel 2 in der ersten Endstellung der Seilwindenanordnung 1 dargestellt, in welcher das Seil 30, abgesehen von einer verbleibenden Restlänge, welche auf der Seiltrommel 2 aufgewickelt ist, von der Seiltrommel 2 abgewickelt ist.

In Fig. 2 ist die zweite Endstellung dargestellt, in welcher das Seil 30 maximal auf die Seiltrommel 2 aufgewickelt ist. In einer Zusammenschau der Fig. 1 und 2 ist direkt ersichtlich, dass der Seilablaufpunkt 6 in Bezug auf die Tragstruktur 20 ortsfest, d.h. unbeweglich, ist. Dadurch ist sichergestellt, dass das Seil 30 unabhängig von der Länge des auf die Seiltrommel 2 aufgewickelten Abschnitts des Seils 30 durch den Seildurchlass 21 ablaufen kann.

Im gezeigten Ausführungsbeispiel ist vorgesehen, dass sich die Spindel 16, insbesondere ein das Außengewinde aufweisender Abschnitt der Spindel 16, in der zweiten Endstellung, vgl. Fig. 2, über zumindest 70% der Längserstreckung der Spindel 16, insbesondere der Längserstreckung des Außengewindes der Spindel 16, in den Hohlraum 5 der Seiltrommel 2 hinein erstreckt.

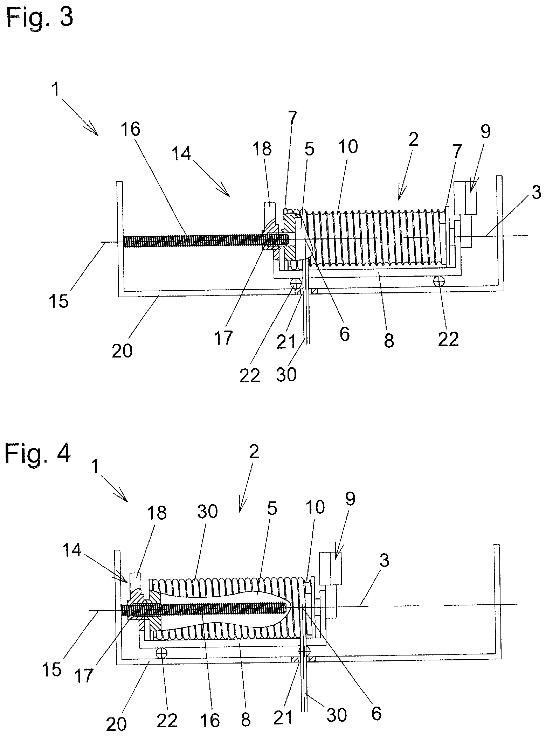

In den Fig. 3 und 4 ist ein zweites Ausführungsbeispiel einer Seilwindenanordnung 1 gemäß der Erfindung dargestellt. Der Aufbau der Seiltrommel 2, des Trommelantriebs 9 und der Tragstruktur 20 entspricht jenem des ersten Ausführungsbeispiels, sodass in den Erläuterungen zum zweiten Ausführungsbeispiel hauptsächlich auf die Unterschiede zum ersten Ausführungsbeispiel hingewiesen wird. Abgesehen von den im Folgenden angeführten Unterschieden gelten die Erläuterungen zum ersten Ausführungsbeispiel auch beim zweiten Ausführungsbeispiel.

Im zweiten Ausführungsbeispiel ist vorgesehen, dass das Außengewinde der Spindel 16 eine Ganghöhe aufweist, welche kleiner ist als der Seildurchmesser des Seils 30. Entsprechend ist die Ganghöhe des Außengewindes der Spindel 16 kleiner als die Ganghöhe der spiralförmigen Rille 10 des Trommelmantels 4 der Seiltrommel 2. Um sicherzustellen, dass der Seilablaufpunkt 6 des Seils 30, an welchem das Seil 30 tangential von der Seiltrommel 2 abläuft und/oder auf die Seiltrommel 2 aufläuft, bezogen auf die Tragstruktur 20 zumindest im Wesentlichen ortsfest ist, weist der Spindeltrieb 14 ein Übersetzungsgetriebe 18 auf. Das Übersetzungsgetriebe 18 überträgt die Drehbewegung der Seiltrommel 2 auf die in die Spindel 16 eingreifende Spindelmutter 17 des Spindeltriebs 14. Das heißt, dass die Drehzahl der Spindelmutter 17 im zweiten Ausführungsbeispiel unterschiedlich zur Drehgeschwindigkeit der Seiltrommel 2 ist. Das Übersetzungsgetriebe 18 ist dabei so konfiguriert, dass ein Verschubmaß der Spindelmutter 17 auf der Spindel 16, bei einer Verdrehung der Seiltrommel 2 um eine Umdrehung, der Ganghöhe der Rille 10 der Seiltrommel 2 bzw. dem Seildurchmesser des Seils 30 entspricht.

Im Ausführungsbeispiel ist vorgesehen, dass das Übersetzungsgetriebe 18 verdrehfest am Lagergestell 8 befestigt ist und die Verdrehbewegung der Seiltrommel 2 an die Spindelmutter 17, mit der entsprechenden Übersetzung der Drehzahl, überträgt.

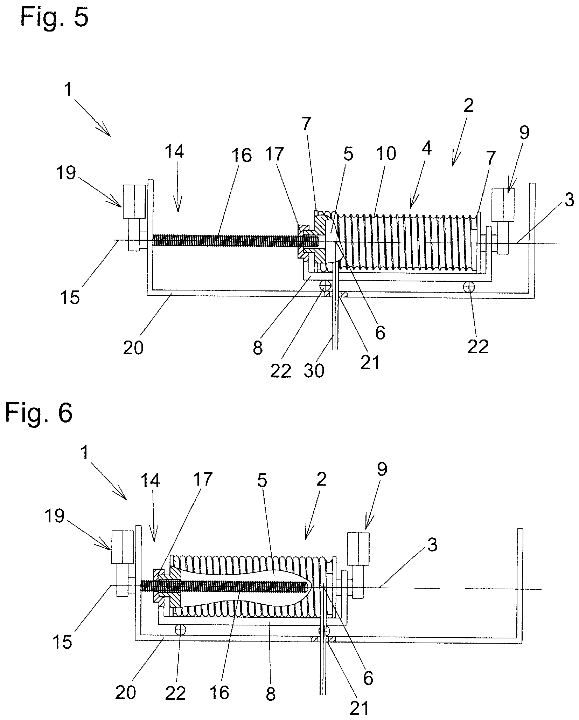

In den Fig. 5 und 6 ist ein drittes Ausführungsbeispiel einer Seilwindenanordnung 1 gemäß der Erfindung dargestellt. Der Aufbau der Seiltrommel 2, des Trommelantriebs 9 und der Tragstruktur 20 entspricht jenem des ersten Ausführungsbeispiels, sodass in den Erläuterungen zum dritten Ausführungsbeispiel hauptsächlich auf die Unterschiede zum ersten Ausführungsbeispiel hingewiesen wird. Abgesehen von den im Folgenden angeführten Unterschieden gelten die Erläuterungen zum ersten Ausführungsbeispiel auch beim dritten Ausführungsbeispiel.

Im dritten Ausführungsbeispiel ist - ähnlich zum zweiten Ausführungsbeispiel - vorgesehen, dass das Außengewinde der Spindel 16 eine kleinere Ganghöhe aufweist als der Seildurchmesser des Seils 30. Entsprechend ist die Ganghöhe des Außengewindes der Spindel 16 auch kleiner als die Ganghöhe der spiralförmigen Rille 10 des Trommelmantels 4 der Seiltrommel 2. Dies ist allerdings nicht zwingend, es könnte in einer alternativen Ausführungsvariante auch vorgesehen sein, dass die Ganghöhe des Außengewindes der Spindel 16 zumindest dem Seildurchmesser des Seils 30 und/oder zumindest der Ganghöhe der spiralförmigen Rille 10 entspricht.

Der Spindeltrieb 14 weist im dritten Ausführungsbeispiel einen Spindelantrieb 19 zur Verdrehung der Spindel 16 um die Spindelachse 15 relativ zur Tragstruktur 20 auf. Die Spindelmutter 17 ist verdrehfest am Lagergestell 8 befestigt. Eine Verdrehung der Spindel 16 mittels des Spindelantriebs 19 bewirkt eine Relativbewegung der Seiltrommel 2 gegenüber der Tragstruktur 20. Der Spindelantrieb 19 wird mittels einer nicht näher dargestellten Steuerelektronik derart angesteuert, dass der Seilablaufpunkt 6 des Seils 30, an welchem das Seil 30 tangential von der Seiltrommel 2 auf- und/oder abläuft, bezogen auf die Tragstruktur 20 zumindest im Wesentlichen ortsfest ist. In anderen Worten wird der Spindelantriebs 19 mittels der Steuerelektronik derart angesteuert, dass die Verdrehbewegung der Seiltrommel 2 und die Verstellung der Seiltrommel 2 mittels des Trommelantriebs 9 um die Trommelachse 3 in eine Richtung parallel zur Trommelachse 3 aufeinander abgestimmt, d.h. synchron, sind, wobei der Seilablaufpunkt 6 zumindest im Wesentlichen ortsfest in Bezug auf die Tragstruktur 20 ist. Die Steuerelektronik könnte hierzu beispielsweise gleichzeitig den Trommelantrieb 9 und den Spindelantrieb 19 ansteuern, um eine synchrone Ansteuerung der Seiltrommel 2 und der Spindel 16 zu bewirken.

In einer alternativen Ausführungsvariante wäre es denkbar, dass die Spindelmutter 17 an der Seiltrommel 2 verdrehfest fixiert ist. Dann erfolgt günstigerweise eine Überlagerung der Drehbewegung der Seiltrommel 2 mit jener der angetriebenen Spindel 16. Anhand der Steuerelektronik kann dabei ebenso sichergestellt werden, dass der Seilablaufpunkt 6 in Bezug auf die Tragstruktur 20 zumindest im Wesentlichen ortsfest ist.

Im Folgenden wird nun auf beispielhafte Anwendungen erfindungsgemäßer Seilwindenanordnung 1 eingegangen. Jede der drei in den Fig. 1 bis 6 dargestellten Ausführungsvarianten kann grundsätzlich bei den nachfolgend erläuterten Anwendungen eingesetzt werden. Der Einfachheit halber beziehen sich die nachfolgend beschriebenen Ausführungsbeispiele auf spezielle Ausführungsvarianten der oben erläuterten ersten Ausführungsform der Seilwindenanordnung 1. Die im Folgenden erläuterten Modifikationen, die beispielsweise die Anzahl der auf einer Seiltrommel aufwickelbaren Seile betreffen, sind gleichermaßen auf die erwähnten weiteren Ausführungsformen erfindungsgemäßer Seilwindenanordnungen übertragbar.

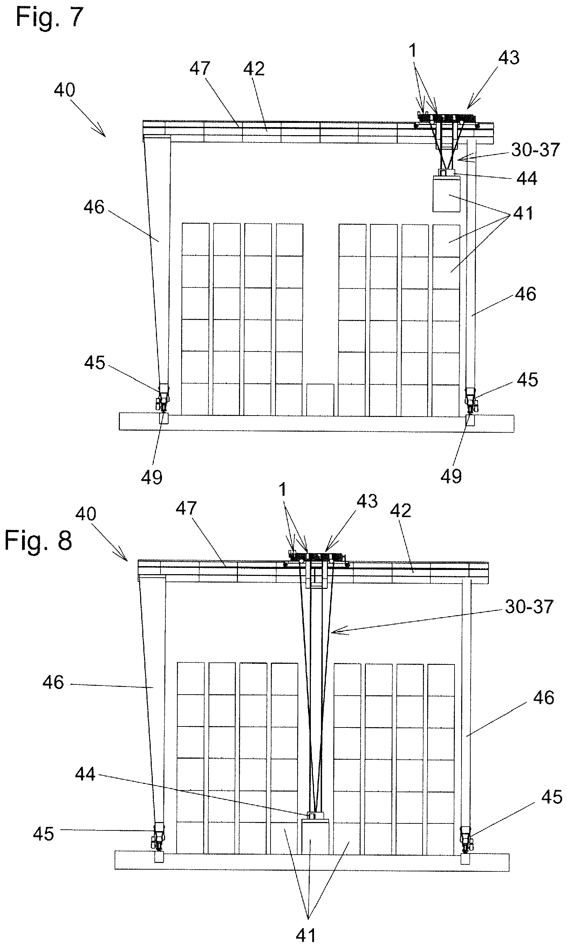

In den Fig. 7 bis 14 ist ein als Portalkran ausgebildeter Kran 40 zum Transport von Containern 41 in einem Containerterminal gezeigt. Der Kran 40 ist bezogen auf eine Richtung orthogonal zur Zeichnungsebene horizontal verschiebbar, wobei sich der Kran 40 mit Fahrwerken 45 des Krans 40 auf Kranschienen 49 abstützt, vgl. Fig. 7. Die Fahrwerke 45 könnten in einer anderen Ausführungsform des Krans 40 auch luftbereift sein und direkt auf dem Untergrund fahren. Der Kran 40 weist im Weiteren einen Kranträger 42 auf, welcher den Bereich zwischen den Kranschienen 49, d. h. eine Abstellfläche für Container 41, überspannt. Der Kranträger 42 stützt sich über Steher 46 des Krans 40 auf den Fahrwerken 45 ab. Auf dem Kranträger 42, der auch als Hauptträger bezeichnet werden kann, ist eine Laufkatze 43 verfahrbar gelagert. Die Laufkatze 43 stützt sich mittels nicht näher bezeichneter Laufrollen auf, auf dem Kranträger 42 befestigten, Laufkatzenfahrschienen 47 ab. Im Weiteren umfasst der Kran 40 eine Lastaufnahmevorrichtung 44 zur Verbindung mit zumindest einem Container 41. Die Lastaufnahmevorrichtung 44 hängt mit Seilen 30 bis 37 der Laufkatze 43 an der Laufkatze 43 und kann relativ zur Laufkatze 43 durch Verlängern oder Verkürzen der freien Länge der Seile 30 bis 37 in vertikaler Richtung bewegt werden. All dies ist im Stand der Technik an sich bekannt.

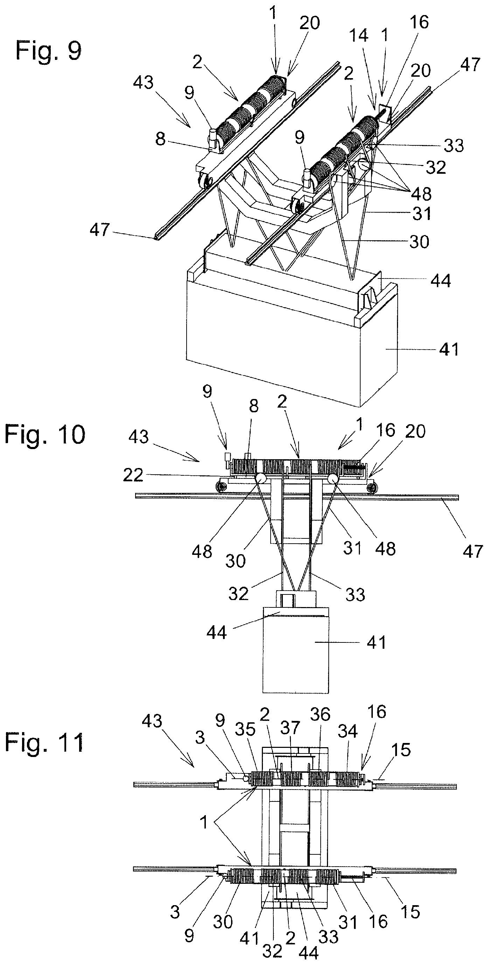

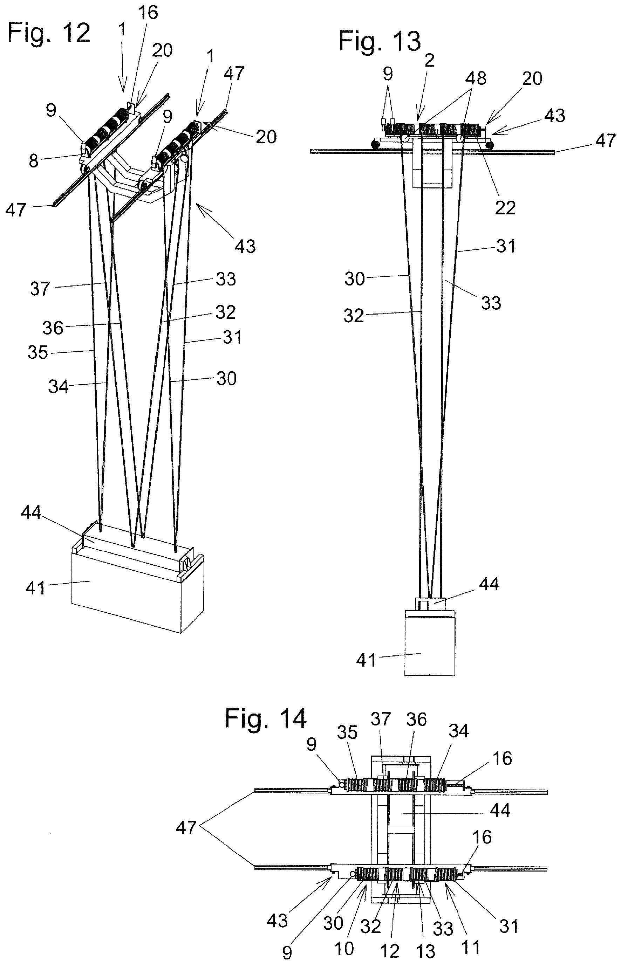

Die sich zwischen der Laufkatze 43 und der Lastaufnahmevorrichtung 44 erstreckenden Seile 30 bis 37 bilden gemeinsam einen Seilschacht, auch Seilturm genannt. Durch eine Zusammenschau der Fig. 7 und 8 ist ersichtlich, dass die Geometrie des Seilschachts, welcher von den Seilen 30 bis 37 aufgespannt wird, in Abhängigkeit von der vertikalen Position der Lastaufnahmevorrichtung 44 variiert. Insbesondere verändert sich die freie Länge der Seile 30 bis 37 und die Relativwinkel zwischen einzelnen Seilen 30 bis 37 zueinander, vgl. auch Fig. 9 und 12.

Die Laufkatze 43 weist im dargestellten Ausführungsbeispiel zwei Seilwindenanordnungen 1 zum Auf- und/oder Abwickeln der Seile 30 bis 37 der Laufkatze 43 auf. Im Ausführungsbeispiel sind die Seile 30 bis 33 auf einer ersten Seiltrommel 2 und die Seile 34 bis 37 auf einer zweiten Seiltrommel 2 aufwickelbar. Die Gesamtheit der Seile 30 bis 33 könnte auch als erste Seilgruppe und die Gesamtheit der Seile 34 bis 37 als zweite Seilgruppe bezeichnet werden. Im Ergebnis sind die Seile 30 bis 33, d.h. die erste Seilgruppe, und die Seile 34 bis 37, d.h. die zweite Seilgruppe, jeweils synchron auf die jeweilige Seiltrommel 2 aufgewickelt oder von der jeweiligen Seiltrommel 2 abwickelbar.

Die jeweilige Seilwindenanordnung 1 umfasst eine um eine Trommelachse 3 drehbar gelagerte Seiltrommel 2 zum Auf- und Abwickeln der jeweiligen Seilgruppe, wobei die Seilwindenanordnung 1 analog zum ersten Ausführungsbeispiel gemäß der Fig. 1 und 2, ausgebildet ist. D.h., die Seilwindenanordnung 1 weist einen Spindeltrieb 14 zum Verschieben der Seiltrommel 2 relativ zur Tragstruktur 20 der Laufkatze 43 auf. Der Spindeltrieb 14 umfasst eine sich entlang einer Spindelachse 15 erstreckende Spindel 16 und eine Spindelmutter 14, welche in die Spindel 16 eingreift. Der Spindeltrieb 14 verbindet die Tragstruktur 20 mit der Seiltrommel 2. Die Spindelachse 15 ist, wie lediglich in Fig. 11 dargestellt, koaxial zur Trommelachse 3 der Seiltrommel 2 angeordnet. Die Spindel 16 ist - analog zu dem in Fig. 1, 2 dargestellten Ausführungsbeispiel - verdrehfest an der Tragstruktur 20 fixiert. Die Ganghöhe des Außengewindes der Spindel 16 entspricht der Ganghöhe der spiralförmigen Rillen 10 bis 13, wobei letztere in Fig. 14 für eine der Seiltrommeln 2 eingezeichnet sind. Der Spindeltrieb 14 ermöglicht eine Verstellung der Seiltrommel 2 relativ zur Tragstruktur 20 der Laufkatze 43. Das Lagergestell 8 der Seilwindenanordnung 1 stützt sich mittels Stützrollen 22 auf der Tragstruktur 20 der Laufkatze 43 ab. Ansonsten wird hinsichtlich der Ausbildung der Seilwindenanordnung 1 auf die Erläuterungen zu dem in den Fig. 1, 2 dargestellten ersten Ausführungsbeispiel verwiesen.

Der Trommelmantel 4 der jeweiligen Seiltrommel 2 weist beim gezeigten Ausführungsbeispiel des Krans 40 vier, bezogen auf eine Richtung parallel zur Trommelachse 3, voneinander beabstandete Seilrillenabschnitte mit jeweils einer Rille 10, 11, 12 und 13 auf, vgl. Fig. 14 in welcher die Rillen 10-13 für eine der Seiltrommeln 2 eingezeichnet sind. D.h., die Seile 30 bis 33 bzw. 34 bis 37 einer jeweiligen Seilgruppe laufen, bezogen auf die Längserstreckung der jeweiligen Seiltrommel 2, beabstandet voneinander von der Seiltrommel 2 ab bzw. auf die Seiltrommel 2 auf.

Die Laufkatze 43 weist Seilrollen 48 zur Ablenkung eines jeweiligen Seils 30 bis 37 auf. Die Seilrollen 48 weisen eine umlaufende Seilrille auf, in welcher das jeweilige Seil 30 bis 37 geführt ist. Die Seilrollen 48 haben den Zweck, das jeweilige Seil 30 bis 37 an einen Verankerungspunkt eines jeweiligen Seils 30 bis 37 an der Lastaufnahmevorrichtung 44 abzulenken.

Analog zu dem in den Fig. 1 und 2 dargestellten ersten Ausführungsbeispiel der Seilwindenanordnung 1 ist vorgesehen, dass ein jeweiliger Seilablaufpunkt des jeweiligen auf der Seiltrommel 2 aufgewickelten Seils 30 bis 37, an welchem das jeweilige Seil 30 bis 37 tangential von der Seiltrommel 2 auf- und/oder abläuft, bezogen auf die Tragstruktur 20 zumindest im Wesentlichen ortsfest ist. D.h., eine Verdrehung der Seiltrommel 2 führt zu einer entsprechenden Verschiebung der Seiltrommel 2 relativ zur Tragstruktur 20, wobei der jeweilige Seilablaufpunkt bezüglich der Tragstruktur 20 im Wesentlichen ortsfest ist. Der jeweilige Seilablaufpunkt wurde in den Figuren 7 bis 14 aus Gründen der Übersichtlichkeit nicht eingezeichnet.

Zwischen dem jeweiligen Seilablaufpunkt und der jeweiligen Seilrolle 48 verläuft das jeweilige Seil 30 bis 37 bezüglich der Trommelachse 3 günstigerweise in tangentialer Richtung. Da die Seilablaufpunkte unbeweglich sind, kann die Anzahl der Seilrollen 48 der Laufkatze 43 minimiert werden, da der Auflaufwinkel des jeweiligen Seils 30 bis 37 von der Seiltrommel 2 zur jeweiligen Seilrolle 48 konstant bleibt. Günstigerweise sind die jeweiligen Seilrollen 48 so ausgerichtet und positioniert, dass das jeweilige abzulenkende Seil 30 bis 37 gerade, d.h. ohne Abweichung von einer Seilrillenebene der jeweiligen Seilrolle 48, vom jeweiligen Seilablaufpunkt in die Seilrille der jeweiligen Seilrolle 48 einläuft.

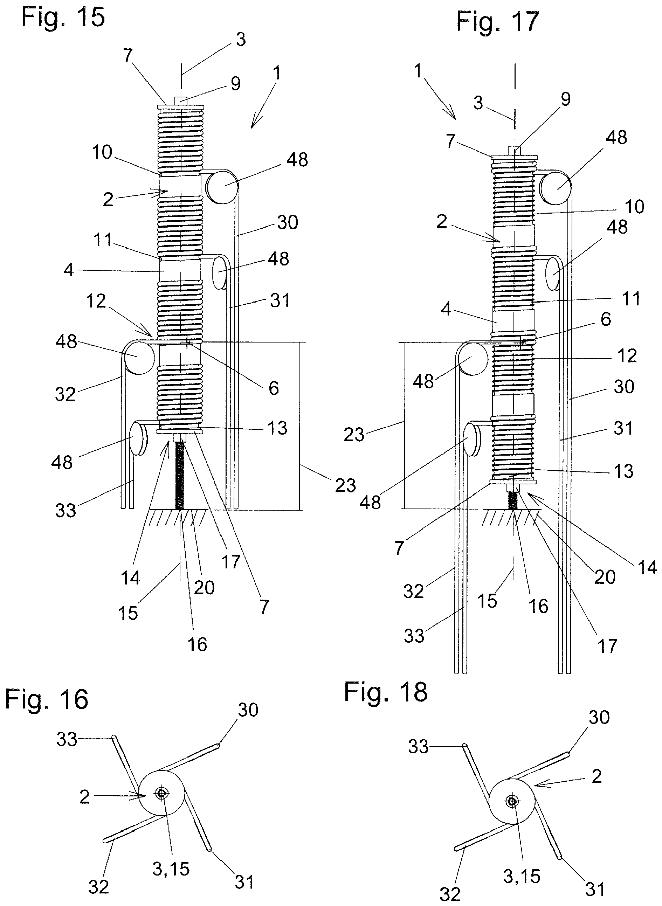

In den Fig. 15 bis 18 ist ein alternatives Ausführungsbeispiel einer Seilwindenanordnung 1 für einen Kran gezeigt. Hierbei ist vorgesehen, dass die Trommelachse 3, und damit auch die Spindelachse 15 des Spindeltriebs 14, vertikal ausgerichtet sind. Die Seile 30 bis 33 laufen im gezeigten Ausführungsbeispiel in vertikaler Richtung nach unten ab. Beispielhaft wurde für das Seil 32 der Seilablaufpunkt 6 eingezeichnet. Der Seilablaufpunkt 6 ist in Bezug auf die Tragstruktur 20, die in Fig. 15 und 17 nur schematisch angedeutet ist, ortsfest. In gleichem Ausmaß, mit welchem die Spindelmutter 17 entlang der Spindel 16 verschoben wird, wird auch die Seiltrommel 2 relativ zur Tragstruktur 20 verschoben.

In den Fig. 15, 17 ist jeweils eine der beiden Endstellungen der Seilwindenanordnung 1 dargestellt, wobei ein Abstand 23 zwischen dem eingezeichneten Seilablaufpunkt 6 des Seils 32 und einer Bezugsebene der Tragstruktur 20 in den Endstellungen, und auch während der Verschiebung der Seiltrommel 2 von einer Endstellung in die andere Endstellung, konstant ist. Im Übrigen ist auch die Position der Seilrollen 48 bezüglich der Tragstruktur 20 ortsfest.

Die Fig. 16 und 18 sind identisch und zeigen, dass der von der Seiltrommel 2 ablaufende Abschnitt des jeweiligen Seils 30 bis 33 tangential bezogen auf die Trommelachse 3 ist.

**Legende zu den Hinweisziffern:**

| | | | |
|---|---|---|---|
| 1 | Seilwindenanordnung | 34 | Seil |
| 2 | Seiltrommel | 35 | Seil |
| 3 | Trommelachse | 36 | Seil |
| 4 | Trommelmantel | 37 | Seil |
| 5 | Hohlraum | | |
| 6 | Seilablaufpunkt | 40 | Kran |
| 7 | Trommelflansch | 41 | Container |
| 8 | Lagergestell | 42 | Kranträger |
| 9 | Trommelantrieb | 43 | Laufkatze |
| 10 | Rille | 44 | Lastaufnahmevorrichtung |
| 11 | Rille | 45 | Kranfahrwerk |
| 12 | Rille | 46 | Steher |
| 13 | Rille | 47 | Laufkatzenfahrschiene |
| 14 | Spindeltrieb | 48 | Seilrolle |
| 15 | Spindelachse | 49 | Kranschiene |
| 16 | Spindel | | |
| 17 | Spindelmutter | | |
| 18 | Übersetzungsgetriebe | | |
| 19 | Spindelantrieb | | |
| 20 | Tragstruktur | | |
| 21 | Seildurchlass | | |
| 22 | Stützrolle | | |
| 23 | Abstand | | |
| | | | |
| 30 | Seil | | |
| 31 | Seil | | |
| 32 | Seil | | |
| 33 | Seil | | |

## Patentansprüche

1. Kran (40), insbesondere Portalkran, zum Transport zumindest eines Containers (41) oder einer sonstigen Last, wobei der Kran (40) zumindest eine, auf einem Kranträger (42) des Krans (40) verfahrbar gelagerte, Laufkatze (43) und eine Lastaufnahmevorrichtung (44) zur Verbindung mit dem Container (41) oder der sonstigen Last aufweist, wobei die Lastaufnahmevorrichtung (44) mittels Seilen (30 - 37) der Laufkatze (43) heb- und senkbar an der Laufkatze (43) hängt, und die Laufkatze (43) zumindest eine Seilwindenanordnung (1) zum Auf- und/oder Abwickeln der Seile (30 - 37) der Laufkatze (43) aufweist, wobei die Seilwindenanordnung (1) zumindest eine um eine Trommelachse (3) drehbar gelagerte Seiltrommel (2) zum Auf- und/oder Abwickeln zumindest eines der Seile (30 - 37) und eine Tragstruktur (20) und einen Spindeltrieb (14) zum Verschieben der Seiltrommel (2) relativ zur Tragstruktur (20) umfasst, wobei der Spindeltrieb (14) eine sich entlang einer Spindelachse (15) erstreckende Spindel (16) aufweist, und ein Seilablaufpunkt (6) des zumindest einen Seils (30 - 37), an welchem das Seil (30 - 37) tangential von der Seiltrommel (2) auf- und/oder abläuft, bezogen auf die Tragstruktur (20) zumindest im Wesentlichen ortsfest ist, **dadurch gekennzeichnet, dass** die Spindelachse (15) koaxial zur Trommelachse (3) der Seiltrommel (2) angeordnet ist.

2. Kran (40) nach Anspruch 1, **dadurch gekennzeichnet, dass** sich die Spindel (16), zumindest in einer Endstellung, zumindest abschnittsweise in einen Hohlraum (5) der Seiltrommel (2) hinein erstreckt.

3. Kran (40) nach Anspruch 1 oder 2, **dadurch gekennzeichnet, dass** die Spindel (16) ein Außengewinde mit einer Ganghöhe aufweist, wobei die Ganghöhe zumindest dem Seildurchmesser des zumindest einen Seils (30 - 37) entspricht.

4. Kran (40) nach Anspruch 3, **dadurch gekennzeichnet, dass** die Seiltrommel (2) einen Trommelmantel (4) mit zumindest einer spiralförmigen Rille (10 - 13) zur Aufnahme zumindest eines der Seile (30 - 37) aufweist, wobei eine Ganghöhe der spiralförmigen Rille (10 - 13) der Ganghöhe des Außengewindes der Spindel (16) entspricht.

5. Kran (40) nach einem der Ansprüche 1 bis 4, **dadurch gekennzeichnet, dass** die Spindel (16) verdrehfest und, zumindest in axialer Richtung bezogen auf die Spindelachse (15), unverschiebbar an der Tragstruktur (20) festgelegt ist.

6. Kran (40) nach einem der Ansprüche 1 bis 5, **dadurch gekennzeichnet, dass** der Spindeltrieb (14) ein Übersetzungsgetriebe (18) zum Übertragen einer Drehbewegung der Seiltrommel (2) auf eine in die Spindel (16) eingreifende Spindelmutter (17) des Spindeltriebs (14) aufweist.

7. Kran (40) nach einem der Ansprüche 1 bis 5, **dadurch gekennzeichnet, dass** eine in die Spindel (16) eingreifende Spindelmutter (17) des Spindeltriebs (14) verdrehfest an der Seiltrommel (2) befestigbar oder befestigt ist.

8. Kran (40) nach Anspruch 7, **dadurch gekennzeichnet, dass** die Seiltrommel (2) an einem Lagergestell (8) der Seilwindenanordnung (1) drehbar gelagert ist, und das Lagergestell (8) gemeinsam mit der Seiltrommel (2) relativ zur Tragstruktur (20) verschiebbar ist.

9. Kran (40) nach einem der Ansprüche 1 bis 8, **dadurch gekennzeichnet, dass** der Spindeltrieb (14) einen Spindelantrieb (19) zur Verdrehung der Spindel (16) relativ zur Tragstruktur (20) aufweist.
